**Europäisches Patentamt**

**European Patent Office**

**Office européen des brevets**

(11) Numéro de publication: **0 080 914**
**B1**

(12) **FASCICULE DE BREVET EUROPEEN**

(45) Date de publication du fascicule du brevet:
**12.06.85**

(21) Numéro de dépôt: **82402044.0**

(22) Date de dépôt: **08.11.82**

(51) Int. Cl.⁴: **B 23 P 11/00** // B21K25/00

(54) **Procédé de fixation d'un axe sur un support métallique, outil pour effectuer cette fixation et assemblage ainsi obtenu.**

(30) Priorité: **13.11.81 FR 8121330**

(43) Date de publication de la demande:
**08.06.83 Bulletin 83/23**

(45) Mention de la délivrance du brevet:
**12.06.85 Bulletin 85/24**

(84) Etats contractants désignés:
**DE GB IT**

(56) Documents cités:
**DE - A - 1 959 847**
**FR - A - 1 520 630**
**FR - A - 1 529 753**
**FR - A - 2 447 772**
**GB - A - 175 445**
**US - A - 1 744 199**
**US - A - 4 097 981**

(73) Titulaire: **RIVAPOMPE Société Anonyme dite:, 6, Avenue Malvesin, F-92400 Courbevoie (FR)**

(72) Inventeur: **Hunsinger, Emile, 49, rue Perronet, F-92209 Neuilly s/Seine (FR)**

(74) Mandataire: **Brot, Philippe et al, CABINET BROT et JOLLY 83, rue d'Amsterdam, F-75008 Paris (FR)**

ACTORUM AG

## Description

La présente invention concerne un procédé pour fixer de façon permanente, étanche et sûre, un axe sur un support métallique. L'invention s'applique plus particulièrement, mais non exclusivement, à un axe de levier pour pompe d'alimentation.

La mise en place d'une pièce métallique cylindrique, et plus particulièrement d'un axe classique, s'effectue généralement par emmanchement serré au travers de deux trous traversant de part en part deux parois parallèles du support.

L'étanchéité d'un tel assemblage au niveau des trous n'est pas toujours garantie car, en raison des variations de température de fonctionnement et de la différence des coefficients de dilatation respectifs des métaux constituant l'axe et le support, il peut apparaître des jeux donnant lieu à des fuites préjudiciables au bon fonctionnement de la pompe.

On a tenté de remédier à cet inconvénient en utilisant des capuchons d'étanchéité que l'on fixe aux extrémités de l'axe, ou encore en appliquant un vernis sur l'axe, mais on conçoit que ces solutions se traduisent par une augmentation des coûts de production.

Selon une autre solution connue, l'axe est introduit latéralement entre les lèvres de deux chapes formées sur lesdites parois parallèles, et les lèvres sont ensuite refermées sur l'axe. On obtient ainsi un assemblage permanent, absolument étanche et susceptible de résister à des efforts d'extraction ou de dessertissage relativement importants.

La présente invention a pour but d'assurer une plus grande sécurité du sertissage par chapes et, pour ce faire, elle concerne un procédé de sertissage de l'axe qui consiste à introduire les extrémités de l'axe entre les lèvres de deux chapes portées par deux parois parallèles dont les faces internes sont écartées d'une distance sensiblement égale à la longueur de l'axe, à refermer ensuite les lèvres des chapes sur lesdites extrémités et à effectuer un sertissage axial des extrémités en appliquant sur les faces externes desdites parois des forces de sens opposé, dirigées selon l'axe.

Pendant l'opération du sertissage axial, l'axe qui est en appui interne participe au soutien des deux parois, de sorte que la déformation est très localisée.

Avantageusement, l'axe peut présenter sur ses sections terminales des reliefs ou des dépressions destinées à assurer une meilleure coopération entre les extrémités de l'axe et les faces internes des parois, après sertissage.

On comprendra mieux l'invention à la lecture de la description qui va suivre, faite en regard des dessins annexés dans lesquels:

— la fig. 1 est une vue en perspective de l'axe, en place dans les chapes entre les parois latérales, avant le sertissage;
— la fig. 2 est une vue en élévation de la face de la fig. 1;
— la fig. 3 est une coupe suivant la ligne III-III de la fig. 2, avant sertissage latéral;
— la fig. 4 montre la même coupe après sertissage;
— la fig. 5 montre un profil en coupe d'une chape en métal relativement malléable avant sertissage latéral et un outil de sertissage approprié;
— la fig. 6 montre un profil en coupe d'une chape en métal moins malléable et un outil de sertissage approprié;
— la fig. 7 est une vue en élévation de face, partiellement en coupe, montrant un axe de forme d'extrémité particulière, en cours de sertissage axial;
— la fig. 8 montre une vue analogue dans le cas d'un axe ayant une autre forme d'extrémité;
— la fig. 9 montre encore une vue en élévation de face d'un assemblage utilisant un axe pourvu de méplats à ses extrémités, et
— la fig. 10 est une vue en coupe suivant la ligne X-X de la fig. 9.

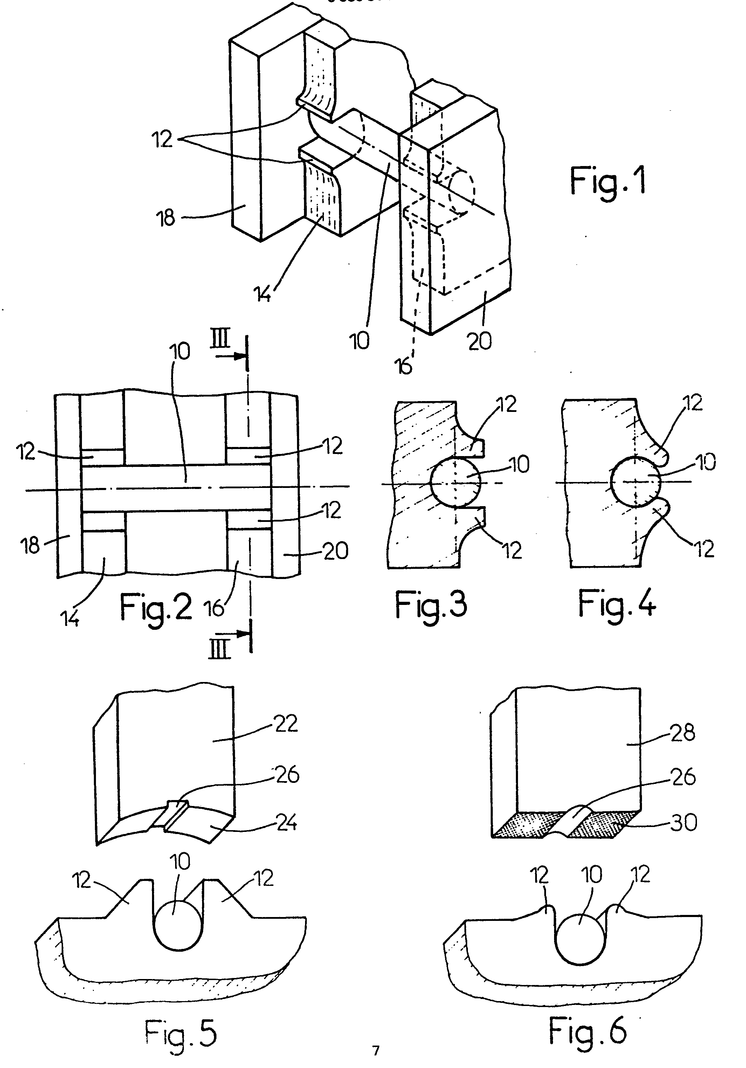

L'assemblage représenté aux fig. 1 à 3 comprend un axe cylindrique 10 dont les extrémités sont introduites dans des encoches semi-cylindriques définies entre les lèvres 12 de deux chapes 14, 16 venant de corps avec la structure de la pompe. Les lèvres sont initialement parallèles et séparées par une distance sensiblement égale au diamètre de l'axe. De part et d'autre des chapes sont prévues deux parois latérales 18, 20, parallèles et écartées d'une longueur égale à la longueur de l'axe, de sorte que les extrémités de ce dernier sont en contact avec les faces internes des parois.

De façon connue en soi, on effectue un assemblage permanent et absolument étanche, en refermant les lèvres 12 sur l'axe 10, comme le montre la fig. 4.

Une telle opération de sertissage se fait avec des paramètres différents selon que le corps de pompe est un métal relativement ductile, par exemple du type Zamak, ou en métal moins malléable, par exemple du type aluminium. Ces paramètres comprennent la dimension des lèvres des chapes, le profil des outils de sertissage et la pression à exercer sur l'outil compte tenu de la quantité de métal à déplacer. Cette quantité est d'autant plus importante que le métal est ductile, à condition toutefois de ne jamais dépasser la limite élastique du matériau.

Les fig. 5 et 6 explicitent comparativement les dimensions qu'il faut prévoir respectivement dans le cas d'un métal malléable du type Zamak et dans le cas d'un métal moins malléable du type aluminium. On notera que la hauteur d'une lèvre en aluminium doit être environ 2,5 fois plus petite que celle en Zamak.

La forme des outils constitue également une caractéristique importante de l'invention, car d'elle dépend en partie l'obtention d'un assemblage fiable. L'outil de sertissage 22 utilisé dans le cas de la fig. 5 comprend une face d'attaque 24 de forme concave permettant de rabattre les lèvres 12 vers l'axe 10. Une encoche transversale 26 est formée sur ladite surface 24.

Pour éviter toute fracture des lèvres en aluminium dans le cas de la fig. 6, on prévoit sur la face d'attaque de l'outil 28 utilisé des empreintes sous forme de stries croisées 30. Sous l'action de la presse, lesdites stries refoulent l'aluminium au contact de l'axe sans dépasser la limite élastique du métal.

Les efforts à exercer sur la presse dépendent naturellement de la nature du métal des chapes. D'une façon générale, il faut appliquer une charge deux fois plus grande pour l'aluminium que pour le Zamak. A titre d'exemple, on applique 1,7 t environ pour le Zamak et 3,4 t pour l'aluminium.

Le sertissage latéral ainsi réalisé résiste à des efforts d'extraction de 350 kg au minimum.

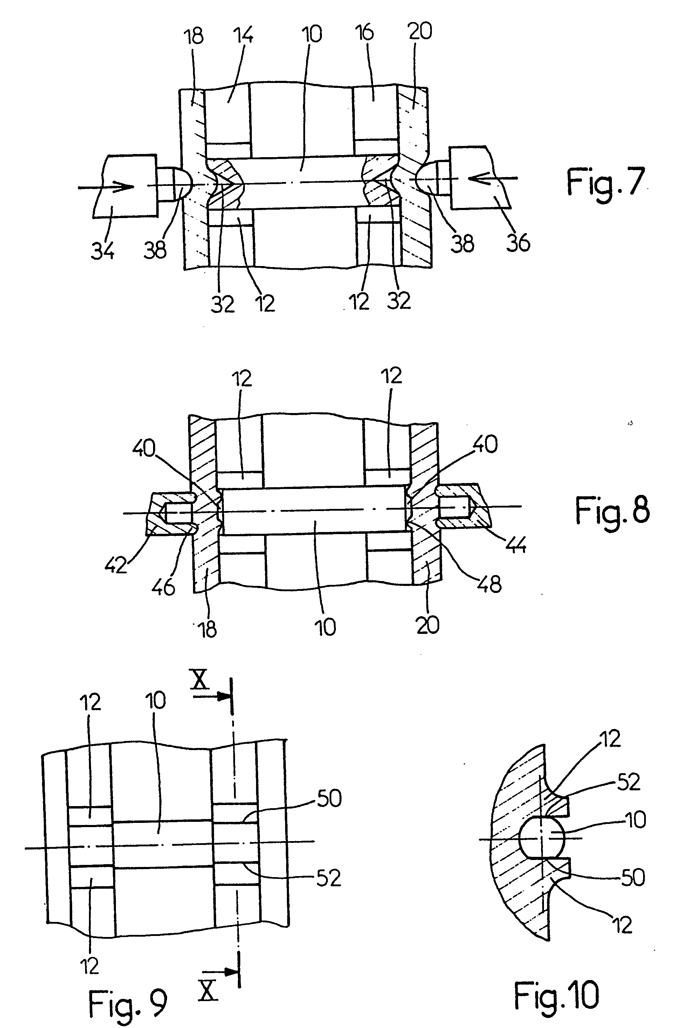

Selon un autre aspect de l'invention, la résistance à l'arrachage est améliorée en effectuant un sertissage axial, comme le montrent les fig. 7 et 8. Ce sertissage se fait à travers les parois latérales 18, 20, et c'est pourquoi les extrémités de l'axe 10 doivent être en contact avec les faces internes desdites parois.

Les formes des extrémités de l'axe peuvent varier et ne sont pas limitatives. Dans le mode de réalisation de la fig. 7, l'axe 10 présente, à chacune de ses extrémités, une dépression conique 32. On utilise deux outils identiques 34, 36 se terminant par des poinçons hémisphériques 38 de diamètre sensiblement égal au diamètre de base de la dépression 32. Ainsi, le métal des parois 18, 20 est refoulé à l'intérieur des dépressions 32.

L'axe 10 représenté sur la fig. 8 se termine à chacune de ses extrémités par une saillie axiale 40 venant en contact avec les faces internes des parois latérales 18, 20. Les outils utilisés 42, 44 ont une forme tubulaire avec un bord terminal arrondi 46. Le diamètre des outils est supérieur à celui des saillies 40, de sorte que, lors du sertissage, le métal des parois 18, 20 est refoulé en formant des aspérités annulaires 48 qui entourent les saillies 40.

Dans le cas du sertissage axial également, l'épaisseur des parois 18, 20 dépend de la malléabilité du métal, étant entendu que l'on peut refouler un volume plus important de métal malléable que de métal moins malléable.

Les efforts appliqués sont dirigés dans le sens de l'axe et sont opposés, de sorte que les parois sont déformées sans être fragilisées. Pendant cette opération, l'axe 10, qui est en appui interne sur les parois, participe au soutien de celles-ci. La déformation est donc très localisée et est comprise entre 0,5 et 1 mm selon les formes et le métal.

Indépendamment du sertissage latéral, la sécurité supplémentaire acquise grâce au sertissage radial correspond à un effort à l'arrachement à peu près équivalent (350 kg), de sorte qu'il serait nécessaire d'exercer au moins 700 kg pour arracher l'axe. Les vibrations des moteurs, la température et les mouvements alternatifs des leviers portés par l'axe n'ébranlent pas l'axe qui, de plus, demeure étanche.

Les fig. 9 et 10 décrivent une forme d'axe comportant, au voisinage de chaque extrémité, deux petits méplats symétriques 50, 52. Par exemple, pour un diamètre d'axe de 6 mm, la largeur du méplat est de 5,4 mm.

Ce mode de réalisation permet d'obtenir un meilleur contact de l'axe avec les parois de son logement, d'éviter la rotation éventuelle dudit axe et de diminuer sensiblement la quantité de métal repoussé sur l'axe. De plus, la résultante des forces agissant sur l'axe se répercute dans une seule direction.

On peut également réaliser aux extrémités de cet axe des reliefs ou des dépressions analogues à celles des fig. 7 et 8, en vue du sertissage en bout au travers des parois.

## Revendications

1. Procédé de fixation d'un axe sur un support métallique, comprenant deux parois latérales et parallèles (18, 20), dont les faces internes sont séparées par une distance sensiblement égale à la longueur de l'axe (10) et deux chapes (14, 16) solidaires desdites faces internes et présentant chacune une encoche semi-cylindrique de diamètre égal à celui de l'axe à ses extrémités, les bords desdites encoches se prolongeant par des lèvres (12) déformables et parallèles entre elles, ledit procédé étant caractérisé en ce qu'il consiste à introduire les extrémités de l'axe entre les lèvres (12) des chapes, lesdites extrémités venant alors en contact avec lesdites faces internes des parois, à effectuer un sertissage latéral en serrant lesdites lèvres sur les extrémités de l'axe et un sertissage axial en appliquant, sur les faces externes desdites parois (18, 20), des forces de sens opposé, dirigées selon l'axe.

2. Procédé selon la revendication 1, caractérisé en ce que l'effort appliqué sur les lèvres (12) des chapes (14, 16), lors du sertissage latéral, dépend essentiellement du métal dans lequel sont réalisées les chapes, des dimensions des lèvres et de la forme des outils.

3. Procédé selon la revendication 2, caractérisé en ce que, dans le cas d'un métal malléable, du type Zamak, la hauteur des lèvres (12) est de l'ordre de 2,5 fois plus grande que dans le cas d'un métal moins malléable, du type aluminium.

4. Outil utilisé pour la mise en œuvre du procédé selon l'une des revendications 1 à 3, dans le cas de chapes en métal malléable, du type Zamak, caractérisé en ce qu'il comprend une surface d'attaque (24) de forme concave présentant, dans sa partie centrale, une encoche rectiligne (26) venant en regard de l'encoche de la chape.

5. Outil selon la revendication 4, utilisé dans le cas de chapes en métal moins malléable, du type aluminium, caractérisé en ce qu'il comprend une surface d'attaque de forme généralement plane pourvue de stries croisées (30), et présentant dans sa partie centrale une encoche rectiligne (26) venant en regard de l'encoche de la chape.

6. Assemblage obtenu par le procédé selon l'une des revendications 1 à 3, caractérisé en ce qu'il comprend un axe (10) présentant à ses extrémités des reliefs, ou des dépressions, autour desquels le métal des parois est refoulé.

7. Assemblage selon la revendication 6, caractérisé en ce que l'axe présente à ses extrémités un évidement cylindrique ou conique (32), et en ce que l'outil de sertissage axial (36) comprend un poinçon hémisphérique (38).

8. Assemblage selon la revendication 6, caractérisé en ce que l'axe présente à ses extrémités une saillie axiale circulaire (40) et en ce que l'outil de sertissage axial (42) est tubulaire, de diamètre supérieur à celui de la saillie.

9. Assemblage selon l'une des revendications 6 à 8, caractérisé en ce que l'axe présente, sur chacune de ses portions terminales, deux méplats (50, 52) destinés à s'opposer à la rotation de l'axe dans les chapes.

## Patentansprüche

1. Verfahren zum Befestigen eines Achsbolzens an einem Metallhalter bestehend aus zwei parallel verlaufenden Seitenwänden (18, 20), deren Innenflächen voneinander etwa die der Länge des Achsbolzens (10) entsprechende Entfernung aufweisen, und aus zwei Gabelstücken (14, 16), die an den Innenflächen befestigt sind und eine halbzylinderförmige Ausnehmung von einem Durchmesser aufweisen, der dem der Enden des Achsbolzens entspricht, wobei sich die Randbereiche der Ausnehmung als Lippen (12) fortbilden, die miteinander parallel liegen und verformbar sind, gekennzeichnet durch Einführen der Achsbolzenenden zwischen die Lippen (12) der Gabelstücke, indem die Enden mit den Innenflächen der Wände in Kontakt kommen, durch seitliches Quetschverbinden, indem die Lippen auf die Enden des Achsbolzens festgeklemmt werden, und durch axiales Quetschverbinden, indem die Aussenflächen der Wände (18, 20) mit längs des Achsbolzens verlaufenden, entgegengesetzt gerichteten Kräften beaufschlagt werden.

2. Verfahren nach Anspruch 1, dadurch gekennzeichnet, dass die auf die Lippen (12) der Gabelstücke (14, 16) bei dem seitlichen Quetschverbinden angelegte Kraft im wesentlichen von dem Metall, aus dem die Gabelstücke gefertigt sind, und von den Abmessungen der Lippen sowie der Form der Werkzeuge abhängt.

3. Verfahren nach Anspruch 2, dadurch gekennzeichnet, dass bei einem hämmer- oder streckbaren Metall wie Zamak die Höhe der Lippen (12) in der Grössenordnung des 2,5fachen gegenüber nichthämmer- oder streckbaren Metalls wie Aluminium liegt.

4. Werkzeug zum Durchführen des Verfahrens nach einem der Ansprüche 1 bis 3 im Falle der Verwendung eines hämmer- oder streckbaren Metalls wie Zamak, dadurch gekennzeichnet, dass es eine Angreiffläche (24) aufweist, die konkav ausgebildet ist und die im mittleren Teil eine geradlinige Ausnehmung (26) besitzt, die der Ausnehmung des Gabelstücks gegenüberzuliegen kommt.

5. Werkzeug nach Anspruch 4 bei Verwendung eines weniger hämmer- oder streckbaren Metalls wie Aluminium für das Gabelstück, dadurch gekennzeichnet, dass es eine Angreiffläche aufweist, die allgemein eben, aber riefenartig (30) ausgebildet ist und die im mittleren Teil eine geradlinige Ausnehmung (26) besitzt, die der Ausnehmung des Gabelstücks gegenüberzuliegen kommt.

6. Zusammenbau aus dem Verfahren eines der Ansprüche 1 bis 3, dadurch gekennzeichnet, dass er einen Achsbolzen (10) aufweist, der an seinen Enden Oberflächenerhöhungen oder -vertiefungen besitzt, um die herum das Metall der Wände gestaucht wird.

7. Zusammenbau nach Anspruch 6, dadurch gekennzeichnet, dass der Achsbolzen an seinen Enden eine zylinderförmige oder konische Ausnehmung (32) aufweist, und dass das zur axialen Quetschverbindung verwendete Werkzeug (36) ein halbkugelförmiger Stauchstemper (38) ist.

8. Zusammenbau nach Anspruch 6, dadurch gekennzeichnet, dass der Achsbolzen an seinen Enden einen kreisförmigen axialen Vorsprung (40) aufweist, und dass das zum axialen Quetschverbinden verwendete Werkzeug einen röhrenförmigen Durchmesser hat, der grösser ist als der des Vorsprungs.

9. Zusammenbau nach einem der Ansprüche 6 bis 8, dadurch gekennzeichnet, dass der Achsbolzen auf jeder seiner auslaufenden Abschnitte zwei Anflachungen (50, 52) aufweist, durch die die Drehung des Achsbolzens in den Gabelstücken gehindert wird.

## Claims

1. A process for fixing an axis to a metal support, comprising two parallel side walls (18, 20), whose internal faces are separated by a distance substantially equal to the length of the axis (10), and two bearing blocks (14, 16) fixed to said internal faces and each having a semi-circular recess of a diameter equal to that of the axis at its ends, the ends of said recesses being extended by deformable and parallel lips (12), said process being characterized in that its consists in introducing the ends of the axis between the lips (12) of the bearing blocks, said ends then coming into contact with said internal faces of the walls, in effecting lateral crimping by pressing said lips on the ends of the axis and axial crimping by applying on the external faces of said walls (18, 20) forces directed in opposite directions along the axis.

2. Process according to Claim 1, characterized in that the force applied to the lips (12) of the bearing blocks (14, 16), during lateral crimping, depends essentially on the metal from which the bearing blocks are made, on the dimension of the lips and on the shape of the tools.

3. Process according to Claim 2, characterized in that in the case of a malleable metal, of the Zamak type, the height of the lips (12) is the order of 2.5 times greater than in the case of a less malleable metal, of the aluminium type.

4. Tool used for implementing the process according to one of Claims 1 to 3, in the case of bearing blocks made from malleable metal, of the Zamak type, characterized in that it comprises a concave shaped operative surface (24) having, in its central part, a rectilinear recess (26) coming opposite the recess in the bearing block.

5. Tool according to Claim 4, used in the case of bearing blocks made from a less malleable metal of the aluminium type, characterized in that it comprises an operative surface having a generally flat shape comprising crossed scoring (30) and having, in its central part, a rectilinear recess (26) coming opposite the recess in the bearing block.

6. Assembly obtained by the process according to one of Claims 1 to 3, characterized in that it comprises an axis (10) having at its ends reliefs or depressions about which the metal of the walls is upset.

7. Assembly according to Claim 6, characterized in that the axis has at its ends a cylindrical or conical recess (32), and in that the axial crimping tool (36) comprises a semi-spherical punch (38).

8. Assembly according to Claim 6, characterized in that the axis has at its ends an axial circular projection (40) and in that the axial crimping tool (42) is tubular with a diameter greater than that of the projection.

9. Assembly according to one of Claims 6 to 8, characterized in that the axis has, on each of its end portions, two flats (50, 52) intended to oppose rotation of the axis in the bearing blocks.

Fig.1

Fig.2

Fig.3

Fig.4

Fig.5

Fig.6

7

Fig.7

Fig.8

Fig. 9

Fig.10